# EUROPEAN PATENT SPECIFICATION

(11) **EP 1 774 117 B1**
(45) Date of publication and mention of the grant of the patent: **18.05.2011**
(21) Application number: 05760430.8
(22) Date of filing: 27.05.2005
(51) Int. Cl.: E04D 1/34

(54) **FIRE RESISTANT PV SHINGLE ASSEMBLY**
FEUERBESTÄNDIGE PV-SCHINDELANORDNUNG
ENSEMBLE BARDEAU PHOTOVOLTAIQUE RESISTANT AU FEU

(30) Priority: 18.06.2004 US 872126
(43) Date of publication of application: 18.04.2007
(73) Proprietor: SunPower Corporation, Systems, Richmond, CA 94804 (US)
(72) Inventor: LENOX, Carl, J., S., Oakland, CA 94602 (US); ALMY, Charles, Berkeley, CA 94709 (US)
(74) Representative: Grünecker, Kinkeldey, Stockmair & Schwanhäusser Anwaltssozietät
(86) International application number: PCT/US2005/018668
(87) International publication number: WO 2006/007212

(56) References cited:
- DE-A1- 10 240 939
- DE-U1- 9 109 605
- DE-U1- 20 204 963
- US-A- 2 659 323
- US-A- 6 119 415
- US-A1- 2003 154 667
- US-B2- 6 959 520

## Description

### BACKGROUND OF THE INVENTION

The widespread use of photovoltaic (PV) systems mounted to homes, businesses and factories is generally considered to be a desirable goal. Several factors are believed to be critical to the acceptance of PV systems, in particular by the individual homeowner. Primary among the factors are ease of installation, cost and aesthetics. One way of addressing both cost and aesthetics has been through the use of photovoltaic shingle assemblies. One way such shingle assemblies address the cost issue is by being used as a replacement for conventional shingles, preferably using similar mounting techniques. The aesthetic issue has begun to be addressed by the use of photovoltaic assemblies in the form of shingles or roofing tiles having similar configurations and dimensions as conventional shingles or roofing tiles, and by the use of appropriate colors and reflecting characteristics to help provide an aesthetically pleasing visual appearance to the roof or other building surface. See, for example, U.S. Patent No. 5,112,408. However, photovoltaic shingle systems have not been as widely accepted as hoped-for because 1) PV mounted integrally with the building roof as shingles operate at higher temperatures, causing a reduction in PV electrical output due to an inverse relationship between temperature and PV efficiency, as well as increasing the temperature of the roofing surface; 2) the same higher operating temperatures approach or exceed the upper limit of the warranted PV operating temperature and serve to shorten the useful life of the PV shingle; 3) some products call for electrical connections between shingles to be made under the roof deck, requiring holes to be drilled through the roof deck which increases the likelihood of water leaks; 4) there has been poor aesthetic match of PV shingles in conjunction with the non-PV areas of the roof; 5) some PV shingles have been limited to amorphous silicon PV technology, which suffer from a low operating efficiency; and 6) the value of the PV shingle has typically been limited to the electrical output of the PV plus the material value of displaced conventional shingles when the product displaces conventional shingles.

One of the concerns with using photovoltaic modules on a building roof is that in the photovoltaic module is a potential fire ignition source and also a potential source of fuel for a fire within the building. In recognition of this, some manufacturers install a Class A rated roof system, such as asphalt shingles, beneath Class C rated PV modules to meet building code requirements. Other manufacturers have used PV module constructions that have glass on both sides of the laminate (rather than Tedlar on the back side) to achieve this rating. However, this approach has not been used on PV modules that are intended to integrate with conventional concrete roofing shingles. Neither of these approaches prevents radiant heat transfer from the PV module to the roof.

See U.S. Patent Numbers 3,769,091; 4,001,995; 4,040,867; 4,189,881; 4,321,416; 5,232,518; 5,575,861; 5,590,495; 5,968,287; 5,990,414; 6,061,978; 6,111,189; 6,584,737; and 6,606,830. See US Patent Application Publication Numbers US 2001/0050101; US 2003/0154680; US 2003/0213201; US 2003/0217768; and US 2004/0031219. See also EP1035591A1; and WO96/24013.
US-A-6119415 discloses a pitched roof with an energy collection system. A portion of the roof is covered with photovoltaic modules that are integrated in rows of roofing plates. Sub-roofing elements of the photovoltaic modules are supported by support brackets. At their upper end the support brackets are attached to roof battens with fastener screws. Every support bracket comprises a lug on its upper end, on which an identical neighboring support bracket can be placed. On the same upper end, every support bracket comprises projections for engagement with a ridge-sided edge of the roof battens. Each support bracket further comprises a receptacle on its lower end for attachment of a photovoltaic element. Overlapping photovoltaic elements are spaced apart in the overlapping portion a certain distance due to the thickness of the support brackets.

### BRIEF SUMMARY OF THE INVENTION

The present invention is directed to a shingle system for mounting to a support surface. The shingle system comprises first, upper and second, lower shingle assemblies, each of the first and second shingle assemblies comprising a support bracket and a shingle body comprising an upper surface, a lower surface, and upper and lower edges connected by first and second side edges. The shingle body is secured to the support bracket. The support bracket comprises upper and lower ends. The upper end has an upper support portion extending away from the lower surface, the upper support portion having an upper support-surface-engaging part engageable with the support surface so that the upper edge of the shingle body is positionable at a first distance from the support surface to create a first gap therebetween. The lower end has a lower support portion extending away from the lower surface. A portion of the shingle body along the lower edge of the first shingle assembly overlies a portion of the shingle body along the upper edge of the second shingle assembly so that the first and second shingle assemblies overlap one another. The lower support portion of the support bracket of the first shingle assembly is engageable with the second shingle assembly so to position the lower edge of the shingle body of the first shingle assembly spaced apart from the upper surface of the shingle body of the second shingle assembly to create a) a second gap between the lower surface of the shingle body of the first shingle assembly and the upper surface of the shingle body of the second shingle assembly, and b) an open region beneath the first shingle assembly fluidly coupling the first and second gaps.

According to the invention a chosen one of c) the lower end of the support bracket of the first shingle assembly and d) the upper end of the support bracket of the second shingle assembly comprises a tab extending downwardly away from the shingle body of the first shingle assembly to a position below the upper surface of the shingle body of the second shingle assembly, the tab having an opening formed therein. The other of c) the lower end of the support bracket of the first shingle assembly and d) the upper end of the support bracket of the second shingle assembly comprises an engagement element engaged within said opening.

The present invention allows for a fire resistant PV shingle assembly to be economically mounted directly to a support surface, such as a sloped roof, in a simple manner to create an aesthetically pleasing structure that integrates well with, for example, conventional roofing tiles. The PV shingle assembly can be constructed to be a substitute for a conventional shingle to eliminate the need for mounting the PV shingle assembly on top of a shingled, or other water-shedding, roof surface. The PV shingle assembly may also be constructed to achieve a Class A fire rating at least partially through the use of a fire shield below the PV body. The PV shingle assembly may also be constructed to provide a ventilation path beneath the PV body to reduce the operating temperature of the PV body and thus potentially improving energy conversion rates.

A first aspect of the invention is directed to a fire resistant PV shingle assembly for mounting to a support surface. The shingle assembly includes a PV assembly and a support and inter-engagement assembly. The PV assembly comprises a PV body having an upper PV surface, a lower PV surface, an upper PV edge, a lower PV edge and side PV edges. The PV body also comprises a fire shield, comprising an upper fire shield surface and a lower fire shield surface, and a connection member securing the PV body and the fire shield to one another. The fire shield is located below the lower PV surface. A support structure mounts the PV assembly to and supports the PV assembly above a support service.

In some embodiments the PV shingle assembly may comprise a ventilation path extending from the lower PV edge, along the fire shield and past the upper PV edge. The support structure may comprise a support and inter-engagement assembly comprising a vertical support element, supporting the PV assembly above a support surface, an upper interlock element, positioned towards the upper PV edge, and a lower interlock element, positioned towards the lower PV edge. The upper interlock element of one PV shingle assembly may be inter-engageable with the lower interlock element of an adjacent PV shingle assembly. A ventilation path may extend along one or both of the upper and lower fire shield surfaces. The PV body may be slidably mounted to the connection member to facilitate removal of the PV body. The fire shield preferably comprises a sheet of material, such as steel, having fire shield edges, an upper fire shield surface and a lower fire shield surface, the sheet of material being a non-flammable material that can structurally support a burning block of wood measuring 30.5 cm x 30.5 cm x 5.7 cm and weighing 2500 g +/- 50 g, the block of wood burning at a temperature of 537° C - 815° C. A chosen one of the upper and lower interlock elements may comprise a tab having a tab width, and the other of the upper and lower interlock elements may comprise a slot having a slot width, the slot width being oversized by a chosen distance relative to the tab width to permit lateral adjustment of one shingle assembly relative to an adjacent shingle assembly, the chosen distance being at least about 20% of the length of the lower PV edge.

A second aspect of the invention is directed to a fire resistant photovoltaic (PV) shingle assembly for mounting to a support surface comprising a PV assembly, a support structure and a ventilation path. The PV assembly comprises a PV body having an upper PV surface, a lower PV surface, an upper PV edge, a lower PV edge and side PV edges, the lower PV surface comprising a fireproof surface. The support structure mounts the PV assembly to and supports the PV assembly above a support surface. The ventilation path extends from the lower PV edge, along the lower PV surface and past the upper PV edge. According to some embodiments, the upper and lower PV surfaces may comprise fireproof glass layers. First and second of the PV assemblies may be secured to an inclined support surface by their support structures. The ventilation path for the second, lower PV shingle assembly may extend to a position below the first, upper PV shingle assembly. The first, upper PV shingle assembly may comprise a downwardly extending rain guard mounted to the first, upper PV assembly at the PV lower edge thereof, the rain guard effectively contacting the upper PV surface of the PV body of the second, lower PV shingle assembly.

A third aspect of the invention is directed to a fire resistant photovoltaic (PV) shingle assembly installation comprising first, upper and second, lower PV shingle assemblies secured to an inclined support surface with the upper PV edge of the second, lower PV shingle assembly underlying the first, upper PV shingle assembly. The ventilation path for the second, lower PV shingle assembly extends to a position below the first, upper PV shingle assembly.

In some embodiments the first, upper PV shingle assembly may comprise a downwardly extending rain guard mounted to the first, upper PV assembly at the PV lower edge thereof, the rain guard contacting the upper PV surface of the PV body of the second, lower PV shingle assembly.

A fourth aspect of the invention is directed to a photovoltaic (PV) shingle assembly, for mounting to a support surface, comprising a PV assembly and a support and inter-engagement assembly. The PV assembly comprises a PV body and a mounting frame to which the PV body is mounted. The support and inter-engagement assembly is mounted to the PV assembly and comprises the following: a vertical support element supporting the PV assembly above a support surface, an upper interlock element positioned towards the upper PV edge, and a lower interlock element positioned towards the lower PV edge. The upper interlock element of one PV shingle assembly is inter-engageable with the lower interlock element of an adjacent PV shingle assembly. A chosen one of the upper and lower interlock elements comprises a tab having a tab width, and the other of the upper and lower interlock elements comprises a slot having a slot width. The slot width is oversized by a chosen distance relative to the tab width to permit lateral adjustment of one shingle assembly relative to an adjacent shingle assembly. The chosen distance is at least about 20% of the length of the lower PV edge.

A fifth aspect of the present invention is directed to a photovoltaic (PV) shingle assembly, for mounting to a support surface, comprising a PV assembly and a support and inter-engagement assembly. The PV assembly comprises a PV body having an upper PV surface, a lower PV surface, an upper PV edge, a lower PV edge and side PV edges, the upper and lower PV surfaces defining PV body planes. The PV assembly also comprises a mounting frame to which the PV body is mounted, the mounting frame comprising edge elements, the edge elements comprising grooves for slidably receiving the side PV edges. The mounting frame also comprises a front piece removably connected to the edge elements so that at least one of the PV body planes intersect the front piece to retain the PV body between the edge elements when the front piece is secured to the edge elements. The PV body is removable from between the edge elements when the front piece is spaced apart from the PV body planes. A support structure mounts the PV assembly to and supports the PV assembly above a support surface. In some embodiments the support structure may comprise a support and inter-engagement assembly including a vertical support element supporting the PV assembly above the support surface, an upper interlock element positioned towards the upper PV edge, and a lower interlock element positioned towards the lower PV edge so that the upper interlock element of one PV shingle assembly may be inter-engageable with the lower interlock element of an adjacent PV shingle assembly.

Various features and advantages of the invention will appear from the following description in which the preferred embodiments have been set forth in detail in conjunction with the accompanying drawings.

### BRIEF DESCRIPTION OF THE DRAWINGS

Fig. 1 is an overall view of a roofmg system including an array of shingle assemblies made according to the invention;

Figs. 2 and 3 are top and bottom isometric views of a shingle assembly of Fig. 1;

Fig. 4 is a right side view of the shingle assembly of Fig. 2;

Fig. 5 is a side view of one of the rows of shingle assemblies of the roofing system of Fig. 1;

Fig. 6 is an enlarged view of a portion of the structure of Fig. 5;

Fig. 7 is an underside view illustrating the interlocking of the upper and lower ends of the support brackets of upper and lower shingle assemblies with portions broken away for clarity;

Fig. 8 is an overhead view illustrating the overlapping ends of upper and lower shingle assemblies;

Fig. 9 is a simplified cross sectional view taken along line 9-9 of Fig. 6 illustrating the pan flashing element of Figs. 5-8 with the side edges of laterally adjacent shingle bodies positioned adjacent to the upper end of the separator of the pan flashing element;

Figs. 10, 11 and 12 are top, side and top perspective views of an alternative embodiment of the pan flashing element of Figs. 5-9;

Figs. 13 and 14 are views of an alternative embodiment of the shingle assembly of Figs. 1-9 similar to the views of Figs. 3 and 5;

Figs. 15-27 disclose embodiments ofPV shingle assemblies using a fire shield opposite the lower PV surface of a PV body;

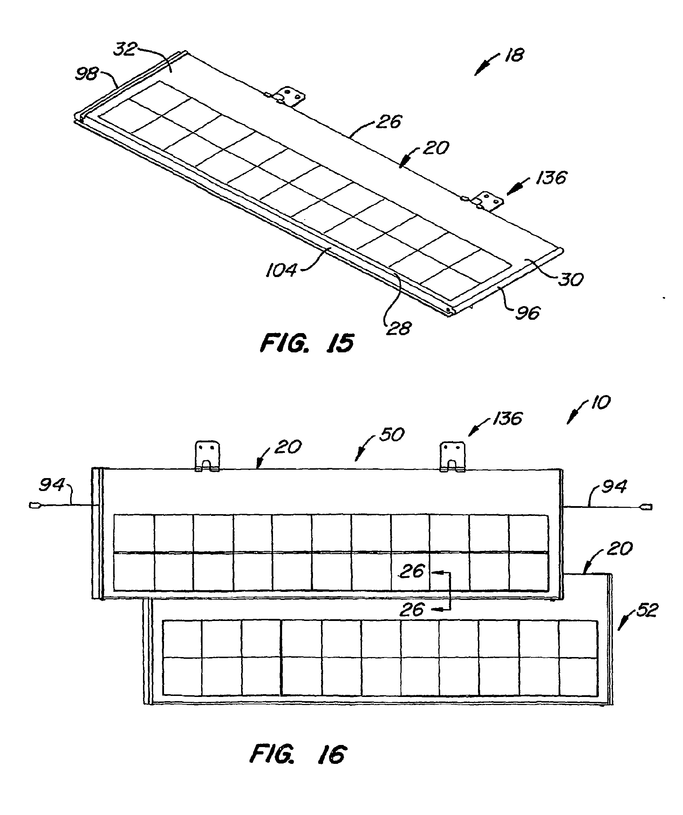

Fig. 15 is a top isometric view of a further embodiment in which the active areas on the upper PV surface are shown by a series of rectangles;

Fig. 16 is a top plan view of first and second shingle assemblies in a shingled, overlapping configuration as part of a roofing system, electrical wires shown extending from the side edges of the first shingle assembly;

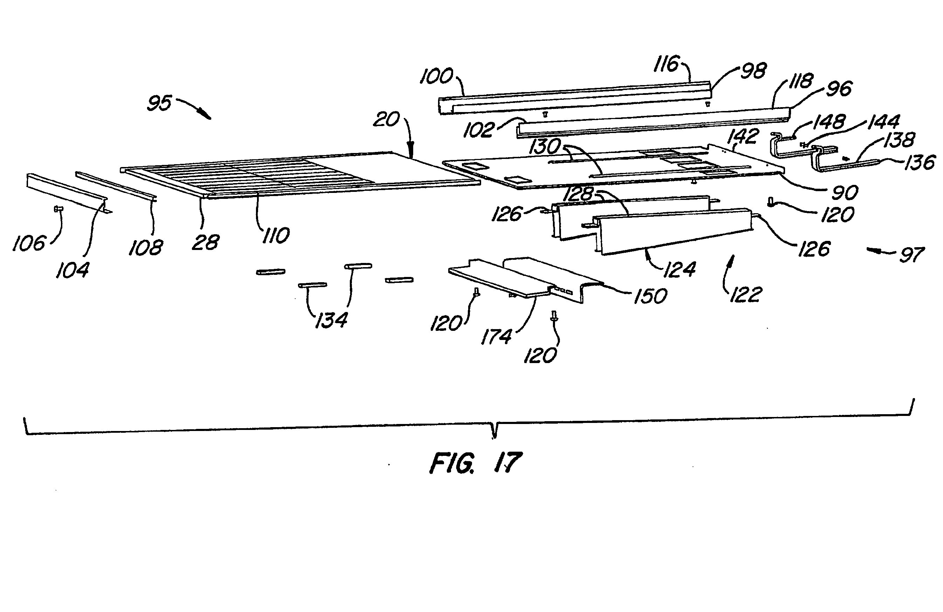

Fig. 17 is unexploded isometric view of the shingle assembly of Fig. 15 with the width of the components being foreshortened;

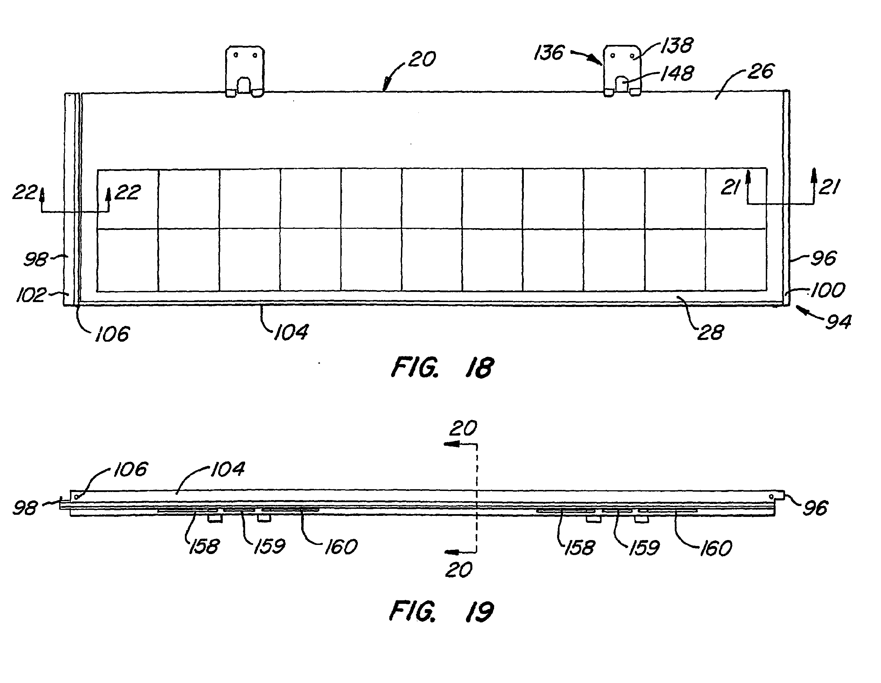

Figs. 18 and 19 are top plan and front elevational views of the shingle assembly of Fig. 15;

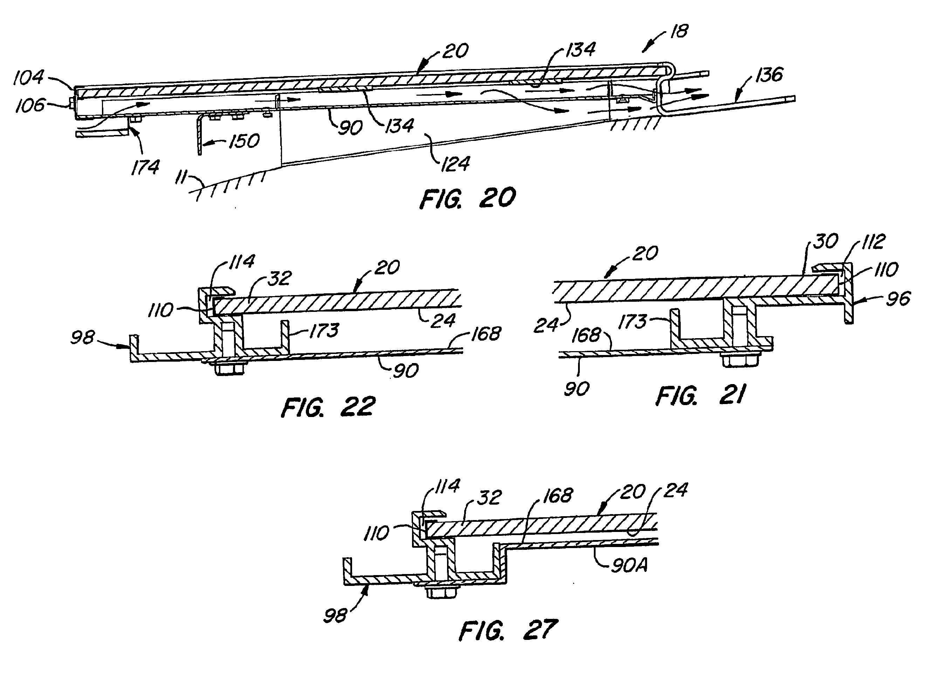

Fig. 20 is a side cross-sectional view taken along line 20-20 of Fig. 19;

Figs. 21 and a 22 are enlarged cross-sectional views taken along lines 21-21 and 22-22 of Fig. 18 illustrating the PV body and the fire shield connected to the first and second inter-engaging edge elements;

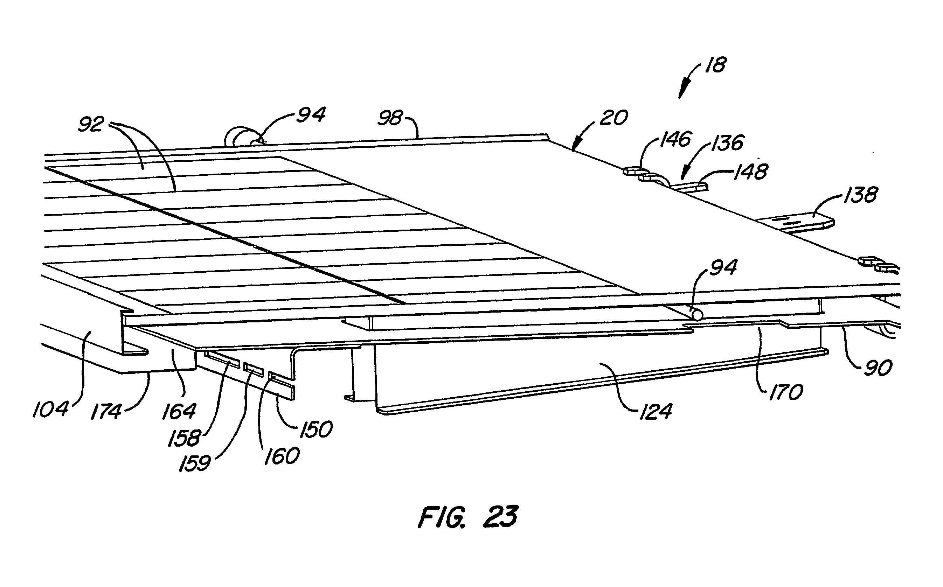

Fig. 23 is a partial right side, top, front cross-sectional view of the shingle assembly of Fig. 15 with the width being foreshortened;

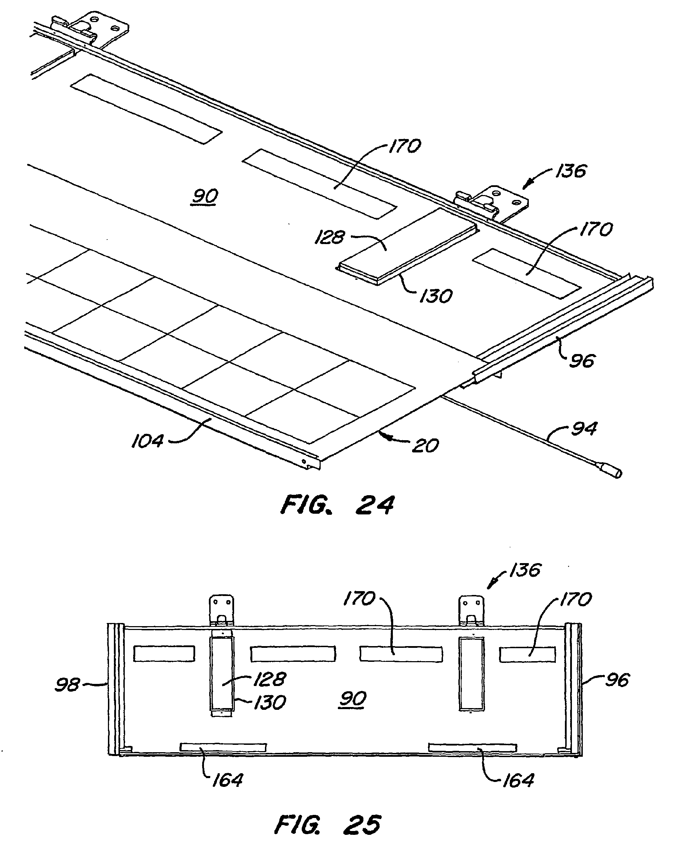

Fig. 24 shows a shingle assembly of Fig. 15 after screws securing the front piece to the edge elements have been removed and illustrating sliding the PV body between the grooves of the edge elements;

Fig. 25 is a top plan view of the structure of Fig. 24 after removal of the front piece and the PV body;

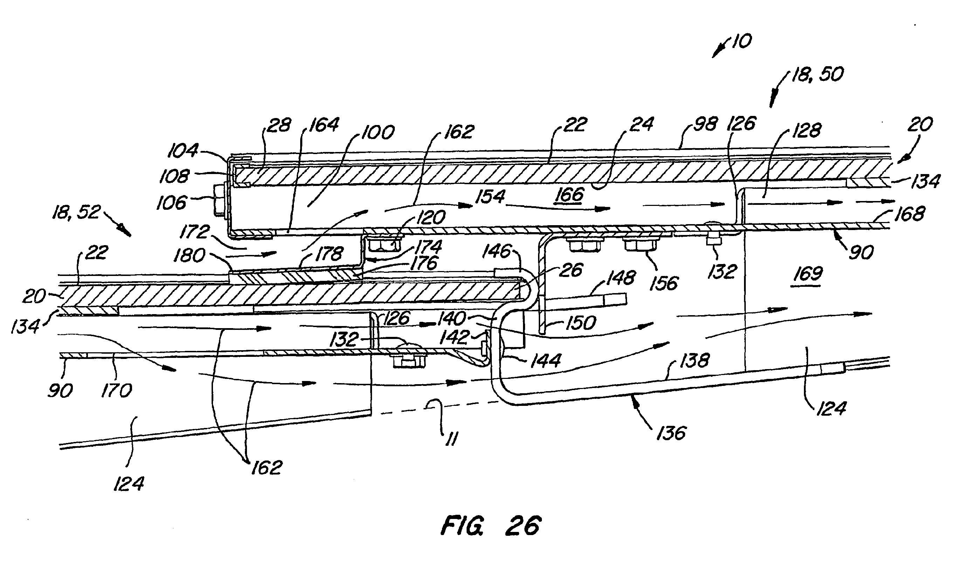

Fig. 26 is an enlarged cross-sectional view taken along line 26-26 of Fig. 16 showing ventilation paths formed by the inter-engaging PV shingle assemblies;

Fig. 27 is an enlarged cross-sectional view similar to that of Fig. 22 of alternative embodiment in which there is a small or no gap between the fire shield and the lower PV surface so the ventilation path extends along the lower fire shield surface;

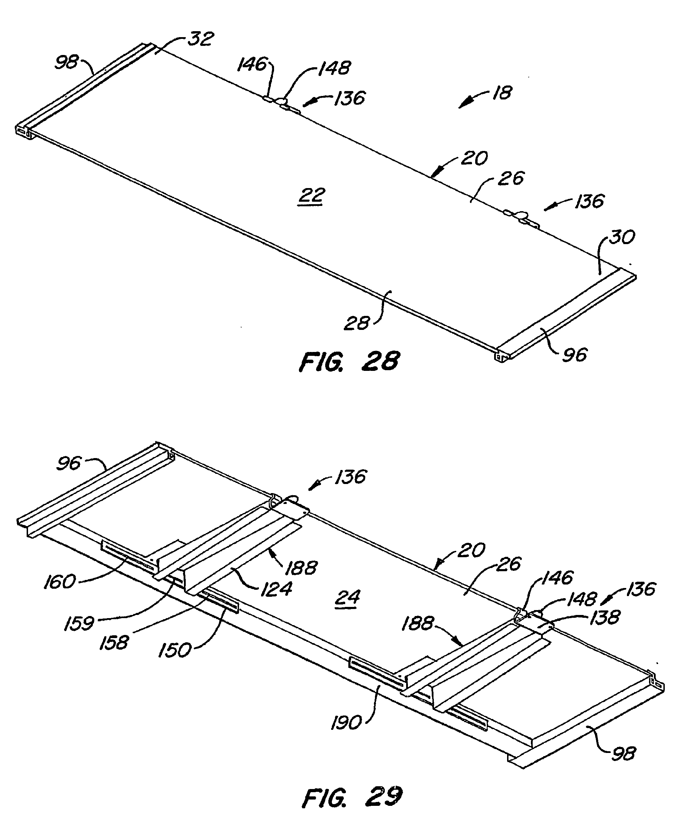

Fig. 28 is a top isometric view of an alternative embodiment of a PV shingle assembly that does not use a fire shield as in the embodiment of Figs. 15-27;

Fig. 29 is a bottom isometric view of the assembly of Fig. 28;

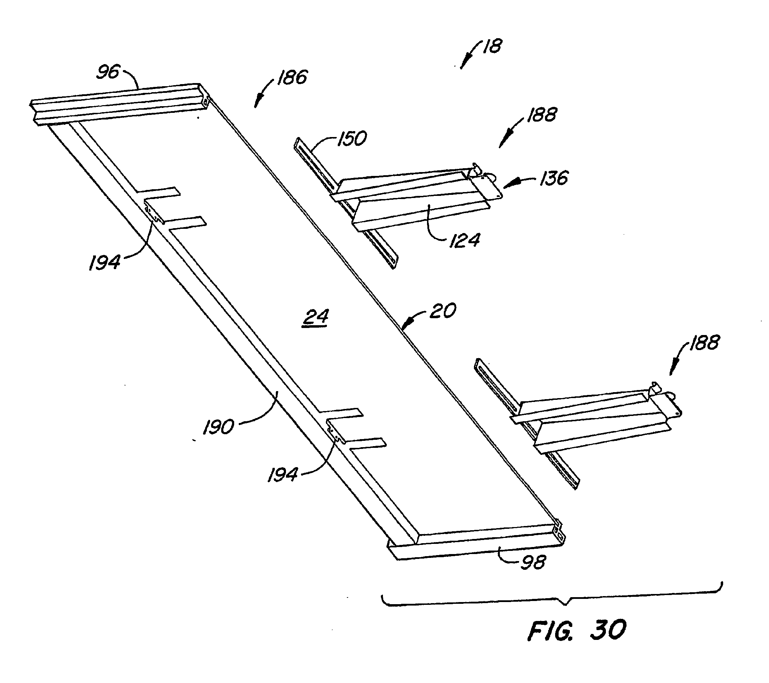

Fig. 30 is a partially exploded bottom isometric view of the assembly of Fig. 29 illustrating the PV module assembly and a pair of brackets of assemblies;

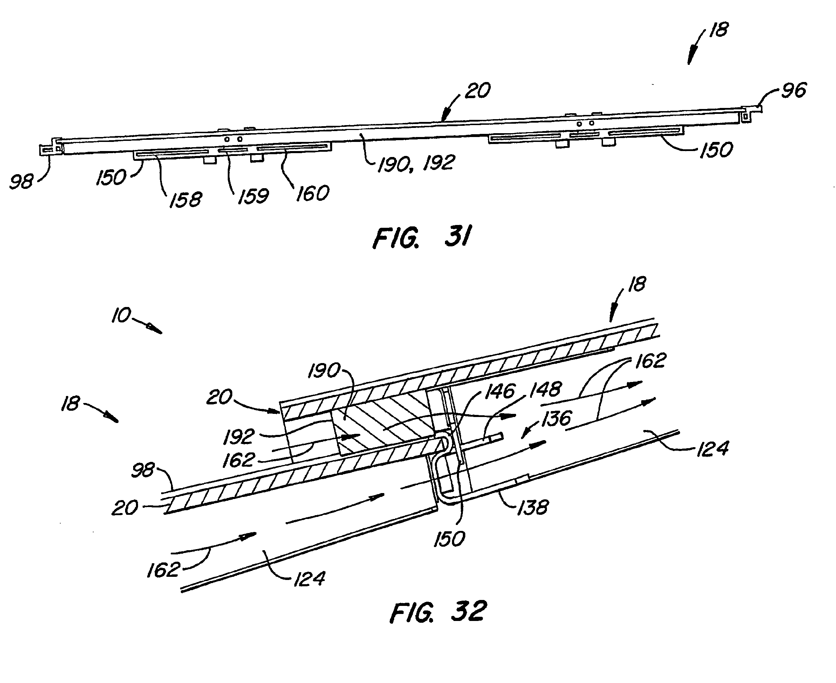

Fig. 31 is a front elevational view of the assembly of Fig. 28; and

Fig. 32 is a cross-sectional view showing the inter-engagement of two shingle assemblies of Fig. 28.

### DETAILED DESCRIPTION OF THE INVENTION

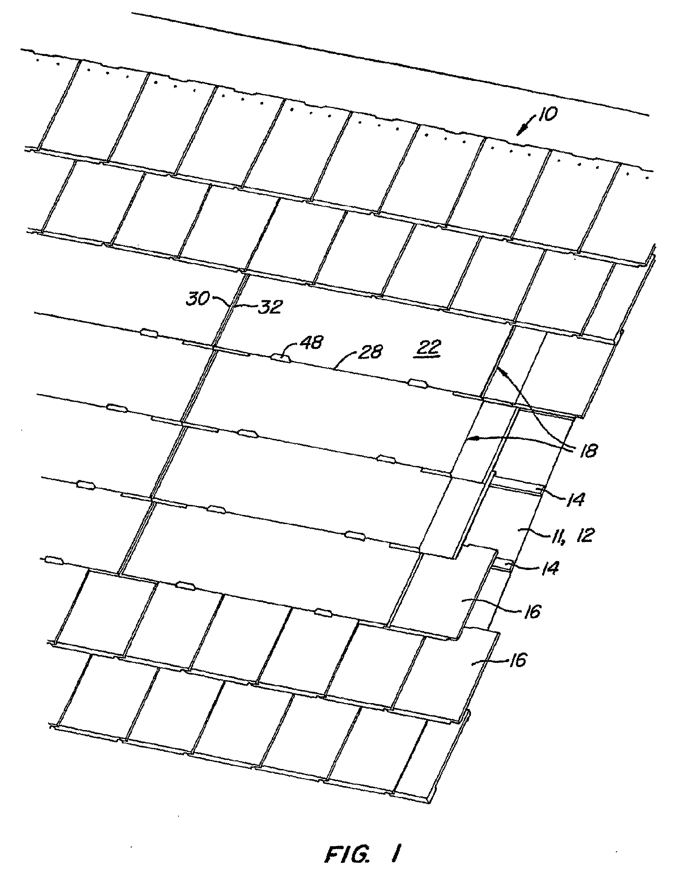

Fig. 1 illustrates a roofing system 10 including a roofing support surface 11, support surface 11 comprising a waterproof and radiant barrier layer 12. Layer 12 may be a conventional underlayment, such as VersaShield® SB2S Fire Barrier Fabric from Elk Technologies, Inc. A series of laterally extending battens 14 are mounted to support surface 11 over layer 12. Support surface 12 is covered by conventional concrete tiles 16, such as MonierLifetile sold by MonierLifetile LLC of Irvine, California, and an array of photovoltaic (PV) shingle assemblies 18. As used in this application, a shingle covers products used to cover a wall or an inclined roof, or other non-horizontal surfaces, in which the lower end of one shingle overlaps the upper end of an adjacent shingle.

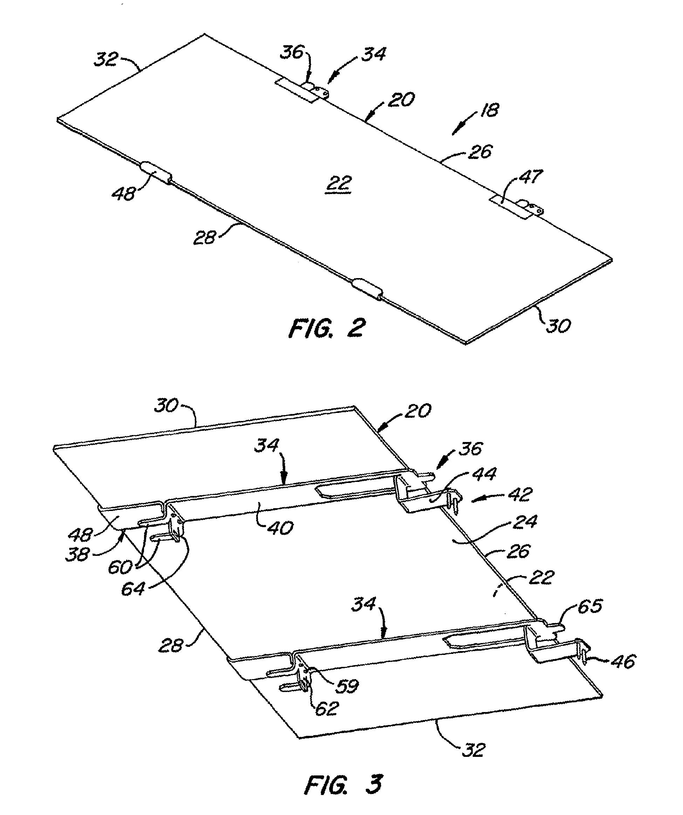

Figs. 2 and 3 are enlarged top and bottom isometric views of a shingle assembly shown in Fig. 1. Each shingle assembly 18 comprises a shingle body 20 having upper and lower surfaces 22, 24, an upper edge 26, a lower edge 28, a first side edge 30 and a second side edge 32. Each shingle assembly 18 also includes a pair of support brackets 34 extending between upper and lower edges 26, 28. Support bracket 34 includes upper and lower ends 36, 38 connected by a middle portion 40. Upper end 36 comprises an upper support portion 42 extending downwardly away from lower surface 24. Portion 42 includes an upper support-surface-engaging part 44 used to secure support bracket 34, and shingle body 20 therewith, to support surface 11 using roofing nails, decking screws or other appropriate fasteners 46. Other fastening systems, such as the use of adhesives, may be used instead of or in addition to fasteners. Upper surface 22 of shingle body 20 has cushioning members 47 along upper edge 26 aligned with upper end 36. Lower end 38 comprises a clip 48 which engages lower edge 38 of shingle body 20. When appropriate, such as when clip 48 is made of steel, a protective material, such as a rubber pad, or soft polymer material such as butyl tape, may be placed between clip 48 and shingle body 20. The remainder of bracket 34 may be made of, for example, galvanized steel, a weatherable polymer or a polymer with a weatherable coating.

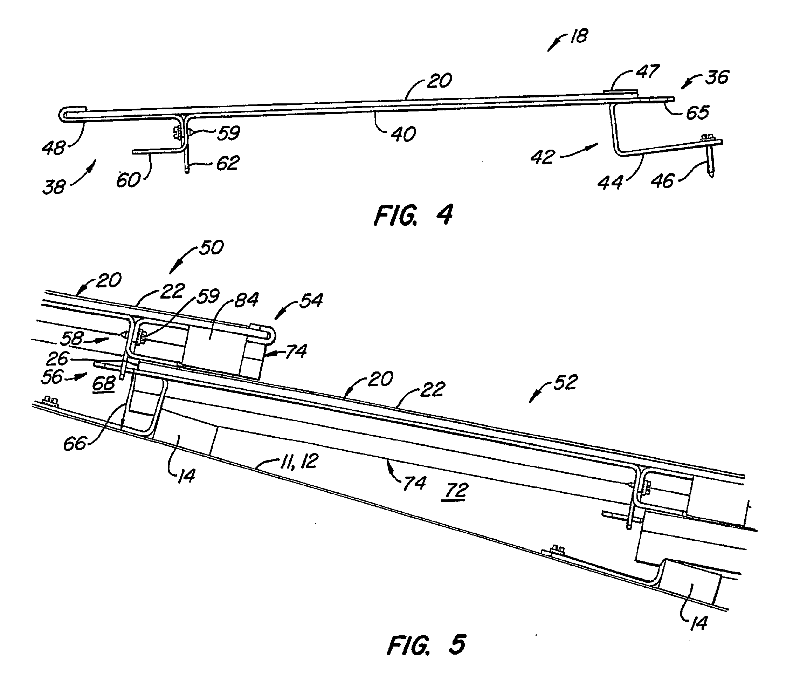

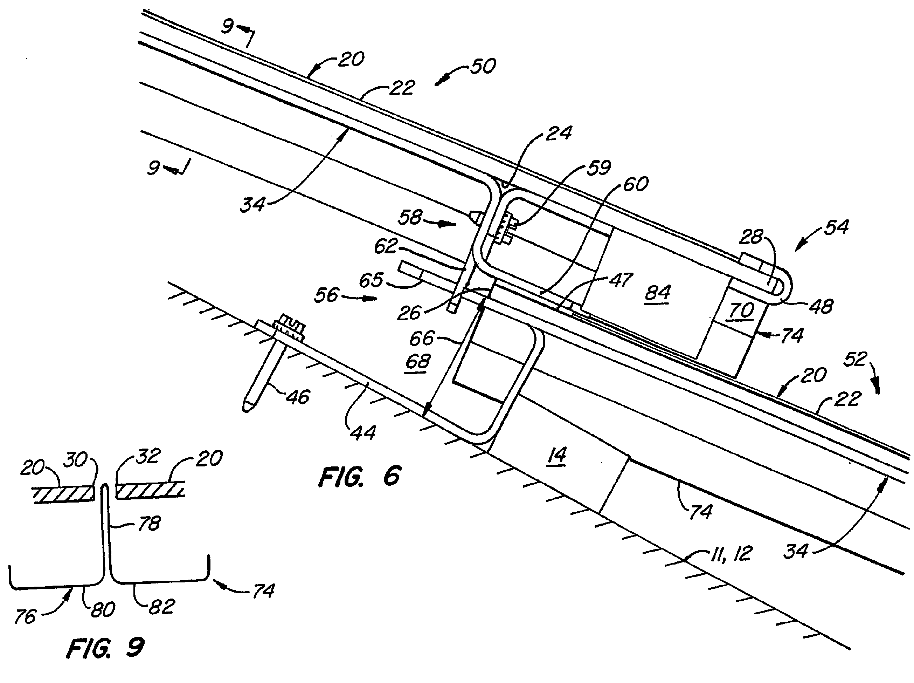

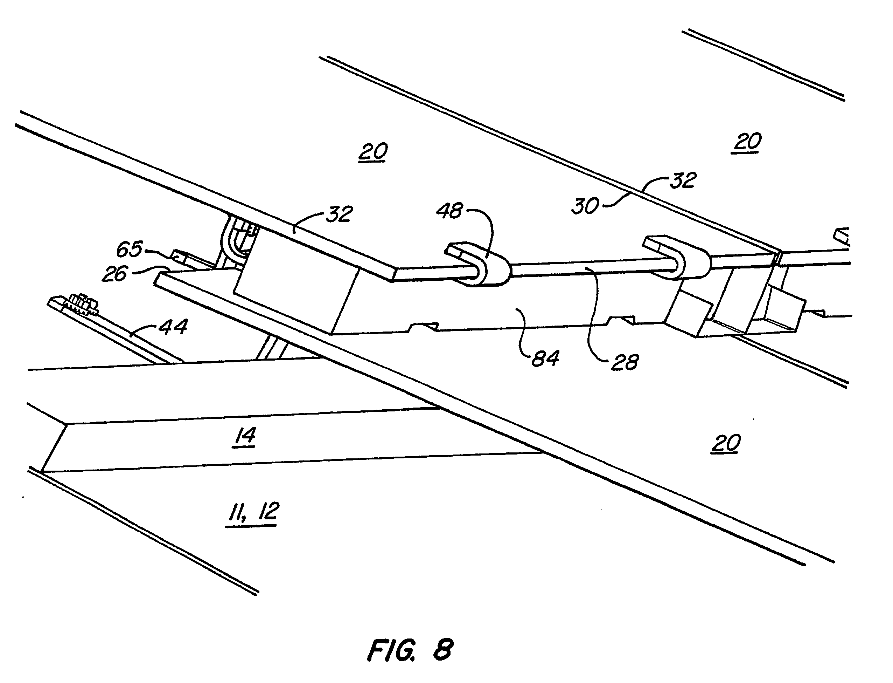

Figs. 5-8 illustrate a first, upper shingle assembly 50 and a second, lower shingle assembly 52 mounted to support surface 11 with the lower end 54 of upper shingle assembly 50 overlying upper end 56 of lower shingle assembly 52. Lower end 38 of support bracket 34 includes a lower support portion 58 extending downwardly away from lower surface 24. Clip 48 is secured to portion 58 by a pair of self-tapping screws 59, or other suitable means. Portion 58 comprises a pair of support members 60 which rest on cushioning members 47 along the upper edge 26 of shingle assembly 52. Portion 58 also includes a downwardly extending tab 62 having an opening 64 formed therein. Opening 64 is sized and positioned for receipt of an engagement element 65 extending from upper end 36 of support bracket 34.

Upper end 36 of support bracket 34 positions upper edge 26 of shingle body 20 of lower shingle assembly 52 a first distance 66 above support surface 11 to create a first gap 68 therebetween. Lower edge 28 of shingle body 20 of upper shingle assembly 50 is spaced apart from upper surface 22 of shingle body 20 of lower shingle assembly 52 to create a second gap 70 therebetween. An open region 72 is created beneath upper shingle assembly 50 and fluidly couples first and second gaps 68, 70.

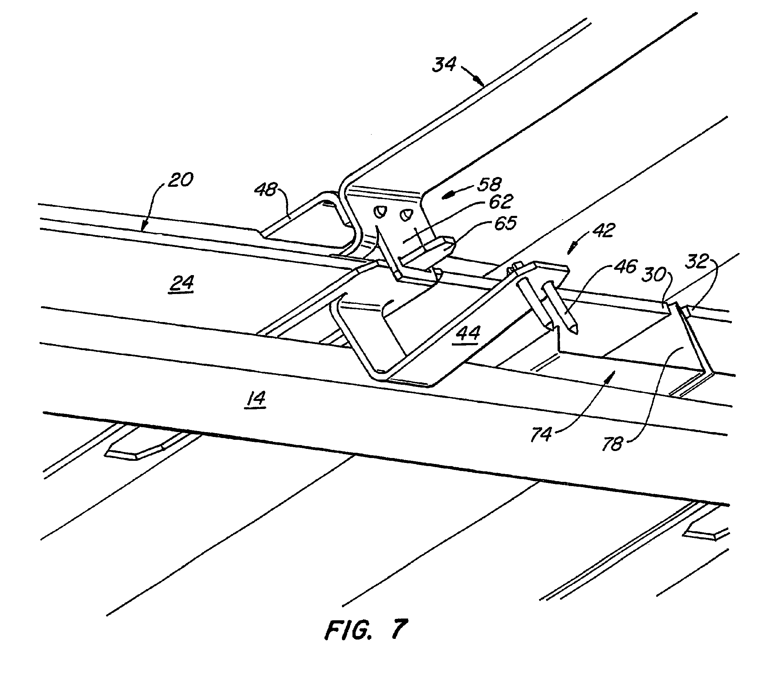

A pan flashing element 74, see Figs. 7-9, is used to collect rainwater that may pass between the side edges 30, 32 of laterally adjacent shingle assemblies 18. Element 74 includes a base 76 and a separator 78 extending upwardly from the base to a position between first and second side edges 30, 32. Base 76 defines first and second water-directing portions 80, 82 on either side of separator 78. The pan flashing element is secured in place by the weight of the tile above it and forces generated by fasteners holding the tile above it into place. The use of separator 78 helps to ensure that wind-blown material, in particular rain, is collected within water-directing portions 80, 82 of base 76. An air-permeable infiltration barrier 84, see Figs. 5, 6 and 8, is positioned within second gap 70 to permit the movement of air into open region 72, thus helping to cool the underside of shingle body 20 and to prevent excessive moisture buildup, but prevents infiltration of wind-blown rain and insects, the building of bird nests, and other undesirable occurrences. A suitable infiltration barrier 84 is a perforated plastic block of material sold by Cor-A-Vent Inc. of Mishawaka, IN as Cor-A-Vent. A polycarbonate honeycomb, sold by Bellcomb Technologies of Minneapolis, MN, may be preferred because it is durable and effectively fireproof.

Some type of adhesive may be used between support brackets 34 and lower surface 24 of shingle body 20 to hold the brackets in place during shipping and installation. A presently preferred adhesive is a butyl tape, which remains generally soft and sticky. Pan flashing element 74 may be made of any appropriate material, such as 24 gauge galvanized steel.

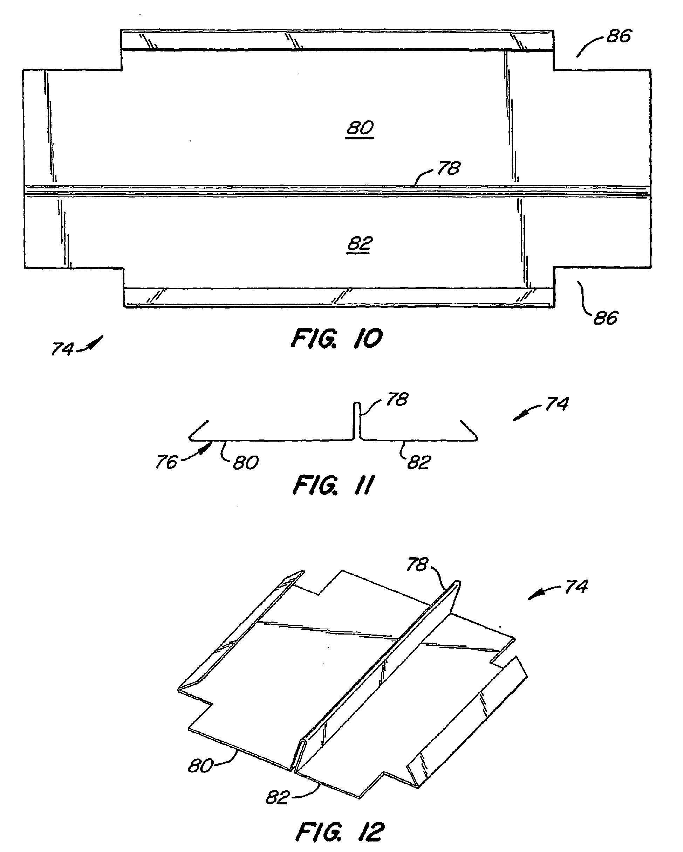

Figs. 10-12 illustrate an alternative embodiment of the flash pan element 74 of Figs. 5-9 specially designed for use with MonierLifetile brand of tiles 16 with like elements having like reference numerals. As can be seen from the Figs., there are cutouts 86 at the corners of this embodiment of flash pan element 74.

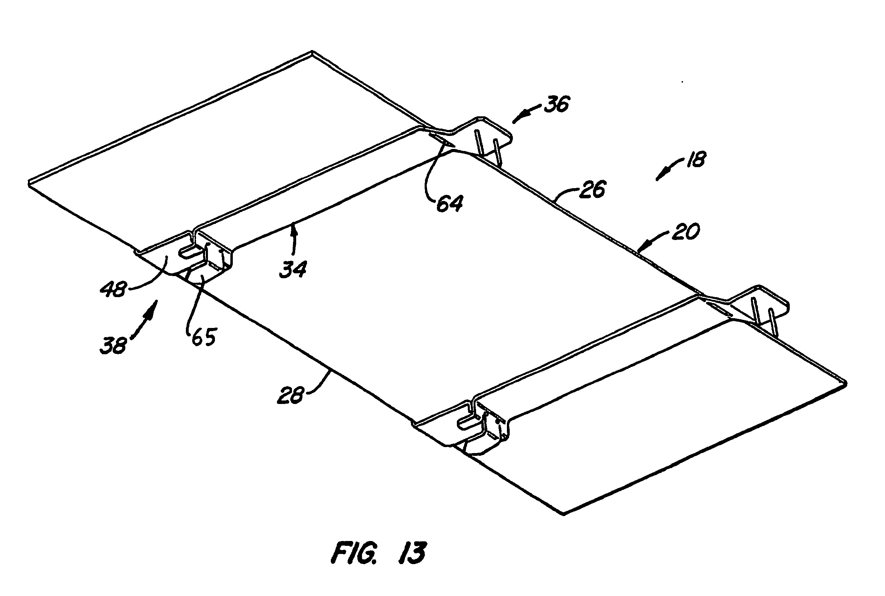

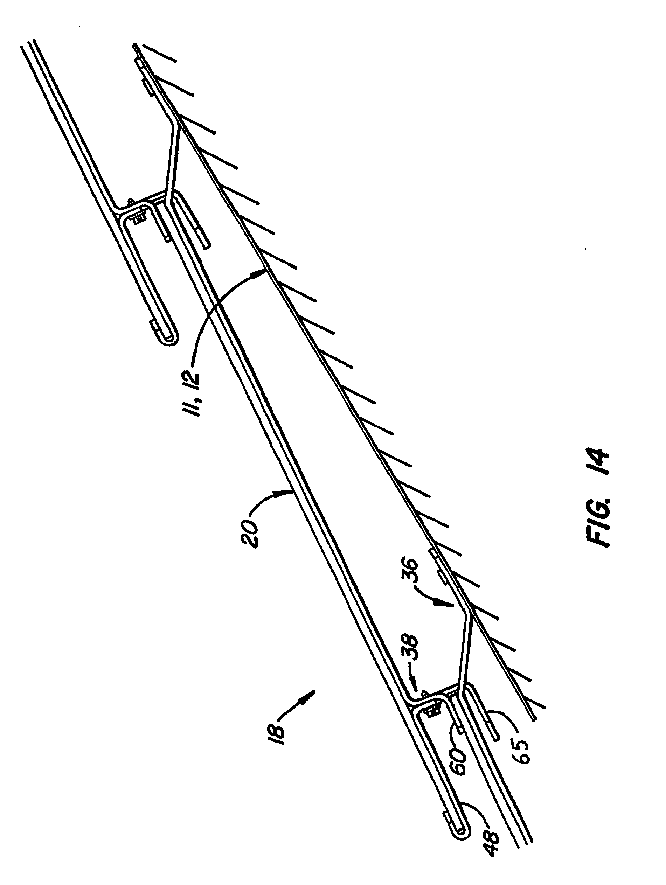

Figs. 13 and 14 illustrate an alternative embodiment of the shingle assembly of Figs. 2-4 with like reference numerals referring to like elements. The primary difference is that opening 64 is formed in upper end 36 of support bracket 34 (as opposed to lower end 38 in the prior embodiment) and engagement element 65 is a part of lower end 38 of support bracket 34.

Installation, when using concrete tiles 16, may proceed as with conventional concrete tile roof installation, with tiles 16 laid right to left in courses (rows) from the bottom towards the top of the roof (all directions facing the roof). Tiles 16 typically have a lip (not shown) that hooks onto batten 14. Concrete tiles 16 are generally staggered so that each row is offset from the one below it by one-half of a tile width. Where PV shingle assemblies 18 are to be installed, the tile 16 to the right of the bottom right tile may be cut off with a concrete saw. If the edge of a shingle assembly 18 falls in the middle of the tile below, the underhanging tongue of the adjacent full tile may be cut off. If not, a tile may be cut in half so that the cut edge roughly aligns between the two tiles below. A double pan flashing 74 is then placed beneath the adjacent concrete tile with separator 78 as close as practical to the side edge of the tile. The total width of the PV shingle assembly array is then measured off, including the gaps between PV shingle assemblies 18 with room for separator 78 of double pan flashing 74. Each PV shingle assembly 18 is preferably designed to span a whole number of concrete tiles, such as four. At the left side of the array of shingle assembly 16, either a half tile or whole tile (overhanging tongue not cut) is installed with a double pan flashing 74 with the separator 78 as close as possible to the edge of tile 16. The distance between the two pan flashings 74 is then verified to be the correct distance. Once this is accomplished, a first, bottom row of brackets 34 is installed with fasteners 46 passing into the support surface 11 at the correct spacing. The first row of brackets 34 has support members 60 located against the top edge of the concrete tiles 16. The first row of PV shingle assemblies 18 is then interengaged with the first row of brackets 34. Double pan flashing 74 is placed between each PV shingle assembly 18 in the row. Once the first, bottom row of PV shingle assemblies 18 is completed the rest of the concrete tiles 16 are installed conventionally. Then the next row of concrete tiles 16 is started. When the PV shingle assembly area is reached, the installation proceeds as above except that support members 60 of each bracket 34 interengages with the underlying upper end 36 of the bracket 34 and cushioning member 47 adhered to shingle body 20 at upper edge 26. In the course of this installation process, PV shingle assemblies 18 are wired together into strings and grounding jumpers are installed between all metal parts (pan flashings 74 and brackets 34). All home runs are run beneath PV shingle assemblies 18 and pass through support surface 11 through a sealed exit box, requiring a single penetration.

Other modification and variation can be made to the above-disclosed embodiments. For example, fewer or greater than two support brackets 34 may be used. Each support bracket may not include a middle portion. Also, a single support bracket may have more than one upper end 36 and/or lower end 38. Installation methods other than those described above may also be used.

Figs. 15-27 disclose further alternatives with like reference numerals referring to like elements. In each of these embodiments PV shingle assemblies 18 use a fire shield 90, see Figs. 17 and 20, opposite lower PV surface 24 of PV body 20. Fig. 15 is a top isometric view of a PV shingle assembly 18 for which the active areas 92 on upper PV surface 22 are shown by two rows of rectangles. The open, non-active area above the active areas 92 accommodates the overlap of PV assemblies 18. Fig. 16 is a top plan view of first and second shingle assemblies 50, 52 in a shingled, overlapping configuration as part of a roofing system 10. Electrical wires 94, shown in Fig. 16, extend from side edges 30, 32 of first shingle assembly 50.

PV shingle assembly 18 comprises a PV assembly 95 and a support and inter-engagement assembly 97. Assembly 97 is used to support PV assembly 95 on a support surface 11. Assembly 97 is also used to inter-engage adjacent PV shingle assemblies 18 to one another. See Fig. 17. PV assembly 95 includes PV body 20, fire shield 90 and what is termed a connection member 94. Connection member 94, see Figs. 17 and 18, includes first and second inter-engageable edge elements 96, 98 secured to one another at the lower ends 100,102 of edge elements 96, 98 by a front piece 104. A pair of screws 106 passes through front piece 104 and secure front piece 104 to edge elements 96, 98. A strip of foam tape 108 is placed between front piece 104 and lower PV edge 28 to help protect PV body 20 from damage. Low friction slide tape 110 is mounted to first and second side edges 30, 32 of PV body 20. The slide tape-covered edges 30, 32 are located within grooves 112, 114, see Figs. 21 and 22, formed within first and second edge elements 96, 98. Slide tape 110 promotes sliding engagement of first and second side edges 30, 32 of PV body 20 within grooves 112, 114 of edge elements 96, 98 as discussed below with reference to Fig. 24. Fire shield 90 is secured to lower ends 100,102 and upper ends 116, 118 of edge elements 96, 98 by screws 120 passing through fire shield 90 and into edge elements 96, 98.

Support and inter-engagement assembly 97 includes vertical support structure 122 for vertically supporting PV assembly 95 on support surface 11. Structure 122 includes a pair of tapered central supports 124. Central supports 124 extend along a line extending between upper PV edge 26 and lower PV edge 28. The length of central supports 124 along such line is preferably at least 50% of the distance between upper and lower edges 26, 28. Central supports 124 have a generally U-shaped cross-sectional shape and have mounting tabs 126 at each end. The upper ends 128 of central supports 124 pass through openings 130 formed in fire shield 90 as shown in Figs. 24 and 25. Mounting tabs 126 are secured to fire shield 90 by rivets 132 as shown in Fig. 26. A pair of resilient, typically rubber, pads 134 are positioned between upper ends 128 of each central support 124 and lower PV surface 24. Central supports 124 not only support fire shield 90 and the various structures mounted to the fire shield, central supports 124 in conjunction with pads 134 also help to prevent excessive deflection of PV body 20 when, for example, it may be walked on.

Vertical support structure 122 also includes a pair of upper mounting brackets 136 each having a base 138 that lies against and is securable to support surface 11 by conventional or unconventional structure, including nails, screws and adhesive. Mounting bracket 136 also has an upright portion 140 to which an upturned edge 142 of fire shield 90 is secured by rivets 144. Upright portion 140 also includes a generally U-shaped clip 146 within which upper PV edge 26 is housed. Clip 146 limits how far PV body 20 is inserted between edge elements 96, 98. Thus, PV assembly 95 is primarily supported by central supports 124 and mounting brackets 136, both of which engage fire shield 90.

Support and inter-engagement assembly 97 also includes upper and lower interlock elements. Upper mounting bracket 136 includes a tab 148 extending from upright portion 140. Tab 148 acts as the upper interlock element. Lower interlock element 150 includes an elongate L-shaped body 152 secured adjacent to the lower surface 154 of fire shield 90 using screws 156 passing through the ends of body 152, through fire shield 90 and into edge elements 96, 98. Body 152 has a number of slots 158,159,160 sized for receipts of tabs 148. The total width of slots 158,159,160 is oversized by a chosen distance relative to the width of tabs 148. This permits shingle assemblies 18 to be laterally staggered over a range of positions relative to adjacent shingle assemblies. This flexibility is important to, for example, allow shingle assemblies 18 to follow the contour of a hip roof. In this disclosed embodiment the chosen distance is at least about 20% of the length of lower PV edge 28.

As shown in Figs. 20 and 26, a ventilation path 162 extends from front piece 104 at lower PV edge 28, through a vent entrance opening 164 in fire shield 90, and through an open region 166 defined between the upper surface 168 of fire shield 90 and lower surface 24 of PV body 20. Ventilation path 162 exits open region 166 through a vent exit opening 170 in fire shield 90 and also between upturned edge 142 of fire shield 90. Ventilation path 162 then extends past upper PV edge 26 and enters a region 169 below lower surface 154 of fire shield 90 of the adjacent, upstream PV shingle assembly 18. The flow of air along ventilation path 162 helps to cool PV body 20 thus increasing energy conversion efficiency. The inclination of support surface 11 helps to pull air along ventilation path 162 by virtue of the chimney effect. It is important to recognize that all, or at least substantially all, of the air passing through open region 166 has not passed through the open region of another PV shingle assembly 18 of a roofing system 10. After air has passed through a vent exit opening 170 of one assembly 18, the air passes beneath the fire shield 90 of the upstream assemblies so that only fresh, relatively cool air enters vent entrance openings 164 of assemblies 18.

It is important that PV shingle assemblies act as water-shedding shingles, in the same manner as concrete tiles 16, for support surface 11. The rain-shedding feature is provided by upper shingle assembly 50 overlapping lower shingle assembly 52, typically by about 7.5 cm (3 inches). The rain-shedding feature is also provided between laterally adjacent assemblies 18 by the placement of an extension 171 of second inter-engageable edge element 98 beneath first, inter-engageable edge element 96. As shown in Figs. 21 and 22, edge elements 96, 98 also include interior drain conduits 173 to collect any water that may seep between side edges 30, 32 and grooves 112, 114.

As can be seen in Fig. 26, there is a gap 172 between front piece 104 of first, upper shingle assembly 50 and shingle body 20 of second, lower shingle assembly 52. Gap 172 acts as the initial portion of ventilation path 162. However, it is at least desirable to prevent rain from being blown, or otherwise passing, through gap 172, past upper PV edge 26 of shingle assembly 52 and onto support surface 11. To prevent this, a rain guard 174 is mounted along the entire width of the PV shingle assembly adjacent to lower surface 154 of fire shield 90. Rain guard 174 is secured in this position by screws 120 passing through holes at either end of the rain guard, through fire shield 90 and into edge elements 96, 98. In Fig. 26 a resilient pad 176 is positioned between the lower leg 178 of rain guard 174 and upper surface 22 of PV body 20. However, it may be preferred in many or most cases to omit pad 176 and configure rain guard 174 so that the distal end 180 of lower leg 178 effectively contacts surface 22; that is rain guard 174 contacts surface 22 or is close enough to surface 22 to still act as an effective rain guard. This should provide sufficient sealing to prevent rain from being blown between rain guard 174 and surface 22 while permitting any small amounts of rain that may collect on surface 22 between rain guard 174 and upper PV edge 26 to seep down surface 22 between rain guard 174 and surface 22.

One of the advantages of the present design is that by simply removing screws 106, front piece 104 may be disconnected from edge elements 96, 98 and then PV body 20 can be removed from between edge elements 96, 98 by simply sliding it out as suggested in Fig. 24. If needed, electrical connections may be accessed through vent exit openings 170 in fire shield 90 so that a PV shingle assembly 18 can be disconnected from adjacent assemblies 18 and PV body 20 completely removed. This permits the removal of PV body 20 from an array of PV shingle assemblies 18 for one or more of inspection, testing, cleaning, repair or replacement.

Another advantage of the present design accrues through the use of fire shield 90. The design of PV shingle assemblies 18 including fire shield 90 provides several fire safety improvements over conventional PV shingle assemblies.

Conventional PV bodies 20 typically include a fireproof, glass upper surface 22 covering combustible polymer-containing substrates extending to lower surface 24. In the event of a fire, PV bodies 20 typically generate combustible gases at lower surface 24. Without the use of fire shield 90, oxygen is available to combust those combustible gases thus permitting PV bodies 20 to burn rapidly. With the use of fire shield 90, the rate of combustion is slowed down by preventing the free access of oxygen to open region 166 and lower surface 24. These combustible gases are then diverted away from open region 166 as they pass through vent openings 164, 170. Edge elements 96, 98 act as airflow barriers to prevent the flow of air or other gases past the edge elements and into and out of open region 166. The diverted gases that pass through vent entrance openings 164 generally combust above or to the side shingle assemblies 18. The combustible gases that pass through vent exit openings 170 combust at a slower rate because of the relative unavailability of oxygen in region 169 between fire shield 90 and support surface 11. Therefore, fire shield 90 helps to promote fire safety by slowing the combustion rate of PV body 20.

A conventional test used to determine the fire rating of roofing systems uses a burning block of wood measuring 30.5 cm x 30.5 cm x 5.7 cm (12" x 12" x 2.25") and weighing 2500 g +/- 50 g, the block of wood burning at a temperature of 537° C - 815° C (1000° F-1500° F). The burning block of wood is placed onto the roofing structure to see if the roofing surface maintains its structural integrity. Fire shield 90 is preferably designed to pass this test. In one preferred embodiment fire shield 90 is a sheet of steel at least 0.61 mm (0.024") thick.

To help maintain the effectiveness of fire shield 90, it is preferred that the ratio of the area of upper fire shield surface on 68 to the area of lower PV surface 24 be at least 0.7 to 1.0. In addition, it is preferred that fire shield 90 act as a radiant barrier to minimize radiation of heat energy from the fire shield to support surface 11. Making fire shield 90 of sheet metal can inherently provide this desirable radiant barrier feature.

Fig. 27 is an enlarged cross-sectional view similar to that of Fig. 22 of alternative embodiment in which there is a small gap, or no gap, between fire shield 90A and lower PV surface 24. With this embodiment fire shield 90A has no vent entrance openings 164 so that ventilation path 162 passes below lower fire shield surface 154. Although this embodiment does not provide the level of cooling of PV body 20 as does the prior embodiment of Figs. 15-26, it eliminates the potential need for using expensive heat sensitive intumescent paint on upper surface 68 of fire shield 90. That is, it may be desirable or necessary to use something that blocks or fills open region 166, such as heat sensitive intumescent paint on upper surface 68 of fire shield 90, with the large-gap embodiment of Figs. 15-26. Therefore, it would be a trade-off between a lower operational temperature, with higher electrical generation efficiency, for the large-gap embodiment of Figs. 15-26 versus the higher operational temperature, with lower electrical generation efficiency, for the small gap embodiment of Fig. 27.

The various components may be made of conventional or unconventional materials suitable for use in an outdoor environment. For example, extruded aluminum having an anodized or painted finish may be used for edge elements 96, 98, galvanized, Glavalume, or aluminized steel may be used for central supports 124, mounting brackets 136, and lower interlock element 150, while sheet aluminum having an anodized or painted finish may be used for rain guard 174.

Figs. 28-32 disclose an alternative embodiment of a PV shingle assembly 18 with like reference numeral referring to like elements. This embodiment does not use a fire shield as in the embodiment of Figs. 15-27 and thus may be a lower-cost alternative. This embodiment may find the greatest utility when PV body 20 is substantially non-flammable. One example of a substantially non-flammable PV body 20 would be a laminate having layers of glass on either side.

The PV shingle assembly 18 of Figs. 28-32 comprises a PV module assembly 186 and a pair of bracket assemblies 188. PV module assembly comprises a rain guard 190 made of a block of honeycomb material. The honeycomb material may be thought of as plastic straws bonded together so that their axes are aligned. The cross-sectional diameter of the passageways passing through the honeycomb material is preferably the range of 3-6 mm. The passageways may have circular, hexagonal, or other regular or irregular cross-sectional shapes of the same or different diameters. The axes of the passageways are generally parallel to edge elements 96, 98. Testing has shown that, due to surface tension, little or no rain passes through the passageways. This prevents water from moving past rain guard 190. However, under non-rain conditions the entire front face 192, see Fig. 31, is substantially open to airflow through rain guard 190 so to cool the body 20.

In this disclosed embodiment rain guard 190 is secured to lower surface 24, typically with an adhesive. Rain guard 190 could be secured to upper surface 22 of PV body 20 along upper edge 26. Also, rain guard 190 could be a separate component secured between the overlapping portions of adjacent PV assemblies 18 after the PV assemblies have been mounted to support surface 11.

PV module assembly 186 also includes a mounting bracket 194 adhered to lower surface 24 of PV body 20 for each bracket assembly 188; see Fig. 30. Mounting bracket 194 is used to secure lower interlock element 150 of bracket assembly 188 to lower surface 24 of PV body 20, typically using screws, not shown. Once installed on a support surface 11, a PV module assembly 186 can be disconnected from mounting brackets 194 and removed leaving mounting brackets 136 secured to support surface 11.

The accessible parts of PV shingle assembly 18 of Figs. 28-32, in particular edge elements 96, 98 and rain guard 190, are preferably made of non-conductive materials. Doing so can eliminate the need for grounding, which can be a major advantage. Edge elements 96, 98 and rain guard 190 also preferably have low flammability. In addition, edge elements 96, 98 preferably have good weatherability. Preferred materials for edge elements 96, 98 include materials such as some silicone rubbers, such as Dow-Corning Silastic® 21180, fire retardant EPDMs, such as available from TSE Industries, and ceramics. We have found that some polycarbonates, such as GE Lexan® 950, 950A, 953, are good materials for the rain guard.

Other modifications and variations can be made to the disclosed embodiments. For example, instead of having PV shingle assemblies 18 interlock with one another, which eliminates the need to secure the lower edge of each assembly 18 to the support surface, each assembly 18 may be fastened to the support surface 11 using appropriate support structure with, for example, nails or screws, along their lower edges as well as their upper edges. That is, each PV shingle assembly 18 would be independently secured to the support surface, typically along their upper and lower edges or along their side edges. Also, front piece 104 could be indirectly connected or coupled to edge elements 96, 98, such as by being releasably secured to fire shield 90. Also, front piece 104 could include structure that does not extend along the entire length of lower PV edge 28, such as one or more clips engaging one, some or all of edge elements 96, 98 and fire shield 90. Further, front piece 104 could remain secured to PV body 20 after being released from, for example, edge elements 96, 98.

## Claims

1. A shingle system for mounting to a support surface (11) comprising:
first, upper and second, lower shingle assemblies (50, 52), each of the first and second shingle assemblies (50, 52) comprising:
a support bracket (34);
a shingle body (20) comprising an upper surface (22), a lower surface (24), and upper and lower edges (26, 28) connected by first and second side edges (30, 32), the shingle body (20) secured to the support bracket (34);
the support bracket (34) comprising:
upper and lower ends (36, 38);
the upper end (36) having an upper support portion (42) extending away from the lower surface (24), the upper support portion (42) having an upper support-surface-engaging part (44) engageable with the support surface (11) so that the upper edge (26) of the shingle body (20) is positionable at a first distance (66) from the support surface (11) to create a first gap (68) therebetween; and
the lower end (38) having a lower support portion (58) extending away from the lower surface (24);
a portion of the shingle body (20) along the lower edge (28) of the first shingle assembly (50) overlying a portion of the shingle body (20) along the upper edge (26) of the second shingle assembly (52) so that the first and second shingle assemblies (50, 52) overlap one another;
the lower support portion (58) of the support bracket (34) of the first shingle assembly (50) engageable with the second shingle assembly (52) so to position the lower edge (28) of the shingle body (20) of the first shingle assembly (50) spaced apart from the upper surface (22) of the shingle body (20) of the second shingle assembly (52) to create:
a) a second gap (70) between the lower surface (24) of the shingle body (20) of the first shingle assembly (50) and the upper surface (22) of the shingle body (20) of the second shingle assembly (52), and
b) an open region (72) beneath the first shingle assembly (50) fluidly coupling the first and second gaps (68, 70);
**characterized in that** a chosen one of
c) the lower end (38) of the support bracket (34) of the first shingle assembly (50) and
d) the upper end (36) of the support bracket (34) of the second shingle assembly (52), comprises a tab (62) extending downwardly away from the shingle body (20) of the first shingle assembly (50) to a position below the upper surface (22) to the shingle body (20) of the second shingle assembly (52), the tab (62) having an opening (64) formed therein; and the other of
c) the lower end (38) of the support bracket (34) of the first shingle assembly (50) and
d) the upper end (36) of the support bracket (34) of the second shingle assembly (52), comprises an engagement element (65) engaged within said opening (64).

2. The shingle system according to claim 1 wherein at least one of the shingle assemblies comprises a photovoltaic (PV) shingle assembly (18).

3. The shingle system according to claim 1 wherein the support bracket (34) comprises a middle portion (40) connecting the upper and lower ends (36, 38).

4. The assembly according to claim 1 wherein the opening (64) in the tab (62) extends parallel to the lower edge (28) of the shingle body (20) and the engagement element (65) extends perpendicular to the lower edge (28) of the shingle body (20).

5. The assembly according to claim 1 wherein the upper support-surface-engaging part (44) of the first shingle assembly (50) comprises a support surface-engaging fastener (46).

6. The shingle system according to claim 1 wherein the lower end (38) of the support bracket (34) engages the lower edge (28) of the shingle body (20).

7. The shingle system according to claim 1 wherein the lower end (38) of the support bracket (34) comprises a clip (48) engaging the lower edge (28) of the shingle body (20).

8. The shingle system according to claim 1 wherein each of the first and second shingle assemblies (50, 52) comprises first and second of said support brackets (34).

9. The shingle system according to claim 1 further comprising an air-permeable rain infiltration barrier (84) positioned within the second gap (70).

10. A building surface assembly (10) comprising:
a building surface (11); and
a shingle system according to claim 1 mounted to the building surface (11).

11. The assembly according to claim 10 further comprising third, upper and fourth, lower of said shingle assemblies mounted to the building surface (11), the second side edges (32) of the shingle bodies (20) of the third and fourth shingle assemblies positioned opposite the first side edges (30) of the shingle bodies (20) of the first and second shingle assemblies (50, 52), respectively.

12. The assembly according to any one of claims 10 or 11 wherein the building surface (11) comprises a waterproof and radiant barrier (12).

13. The assembly according to any one of claims 10 to 12 further comprising a plurality of shingle tiles (16) mounted to the building surface (11), at least some of the shingle tiles (16) being adjacent to the shingle assemblies (50, 52).

## Patentansprüche

1. Schindelanordnung zur Befestigung an einer Trägerfläche (11) mit:
einer ersten, oberen und einer zweiten, unteren Schindelbaugruppe (50, 52), wobei sowohl die erste als auch die zweite Schindelbaugruppe (50, 52) umfasst:
einen Stützträger (34);
einen Schindelkörper (20) mit einer Oberseite (22), einer Unterseite (24), und einer oberen sowie einer unteren Kante (26, 28), die durch eine erste und eine zweite Seitenkante (30, 32) verbunden sind, wobei der Schindelkörper (20) an dem Stützträger (34) fixiert ist;
wobei der Stützträger (34) umfasst:
ein oberes und ein unteres Ende (36, 38);
wobei das obere Ende (36) einen oberen Trägerabschnitt (42) aufweist, der sich ausgehend von der Unterseite (24) weg erstreckt, wobei der obere Trägerabschnitt (42) einen Trägerflächen-Eingriffteil (44) aufweist, der mit der Trägerfläche (11) derart in Eingriff gebracht werden kann, dass die obere Kante (26) des Schindelkörpers (20) in einem ersten Abstand (66) von der Trägerfläche (11) positionierbar ist, so dass ein erster Spalt (68) dazwischen entsteht; und
wobei das untere Ende (38) einen unteren Trägerabschnitt (58) aufweist, der sich ausgehend von der Unterseite (24) weg erstreckt;
wobei ein Abschnitt des Schindelkörpers (20) entlang der unteren Kante (28) der ersten Schindelbaugruppe (50) einen Abschnitt des Schindelkörpers (20) entlang der oberen Kante (26) der zweiten Schindelbaugruppe (52) überdeckt, so dass erste und zweite Schindelbaugruppe (50, 52) einander überlappen;
wobei der untere Trägerabschnitt (58) des Stützträgers (34) der ersten Schindelbaugruppe (50) mit der zweiten Schindelbaugruppe (52) entlang der oberen Kante (26) der zweiten Schindelbaugruppe (52) in Eingriff gebracht werden kann, um die untere Kante (28) des Schindelkörpers (20) der ersten Schindelbaugruppe (50) beabstandet von der Oberseite (22) des Schindelkörpers (20) der zweiten Schindelbaugruppe (52) zu positionieren, um dabei:
a) einen zweiten Spalt (70) zwischen der Unterseite (24) des Schindelkörpers (20) der ersten Schindelbaugruppe (50) und der Oberseite (22) des Schindelkörpers (20) der zweiten Schindelbaugruppe (52) zu erzeugen, und
b) einen offenen Bereich (72) unter der ersten Schindelbaugruppe (50) zu schaffen, der den ersten und den zweiten Spalt (68, 70) strömungstechnisch miteinander verbindet;
**dadurch gekennzeichnet, dass**
entweder
c) das untere Ende (38) des Stützträgers (34) der ersten Schindelbaugruppe (50) oder
d) das obere Ende (36) des Stützträgers (34) der zweiten Schindelbaugruppe (52)
eine Lasche (62) umfasst, die sich ausgehend vom Schindelkörper (20) der ersten Schindelbaugruppe (50) nach unten bis zu einer Position unterhalb der Oberseite (22) des Schindelkörpers (20) der zweiten Schindelbaugruppe (52) erstreckt, wobei in der Lasche (62) eine Öffnung (64) ausgebildet ist;
und dass das jeweils andere entweder
c) untere Ende (38) des Stützträgers (34) der ersten Schindelbaugruppe (50) oder
d) obere Ende (36) des Stützträgers (34) der zweiten Schindelbaugruppe (52) ein Verbindungselement (65) umfasst, das in die Öffnung (64) eingreift.

2. Schindelanordnung nach Anspruch 1, **dadurch gekennzeichnet, dass** zumindest eine der Schindelbaugruppen eine Photovoltaik- (PV) -schindelbaugruppe (18) umfasst.

3. Schindelanordnung nach Anspruch 1, **dadurch gekennzeichnet, dass** der Stützträger (34) einen mittleren Abschnitt (40) umfasst, der die obere und die untere Kante (36, 38) miteinander verbindet.

4. Die Anordnung nach Anspruch 1, **dadurch gekennzeichnet, dass** sich die Öffnung (64) in der Lasche (62) parallel zu der unteren Kante (28) des Schindelkörpers (20) erstreckt, und sich das Verbindungselement (65) im rechten Winkel zur unteren Kante (28) des Schindelkörpers (20) erstreckt.

5. Die Anordnung nach Anspruch 1, **dadurch gekennzeichnet, dass** der Trägerflächen-Eingriffteil (44) der ersten Schindelbaugruppe (50) ein Trägerflächeneingriff-Befestigungselement umfasst.

6. Schindelanordnung nach Anspruch 1, **dadurch gekennzeichnet, dass** das untere Ende (38) des Stützträgers (34) mit der unteren Kante (28) des Schindelkörpers (20) in Eingriff steht.

7. Schindelanordnung nach Anspruch 1, **dadurch gekennzeichnet, dass** das untere Ende (38) des Stützträgers (34) eine Halteschelle (48) umfasst, die mit der unteren Kante (28) des Schindelkörpers (20) in Eingriff steht.

8. Schindelanordnung nach Anspruch 1, **dadurch gekennzeichnet, dass** sowohl die erste als auch die zweite Schindelbaugruppe (50, 52) einen ersten und einen zweiten Stützträger (34) umfasst.

9. Schindelanordnung nach Anspruch 1, **dadurch gekennzeichnet, dass** sie ferner eine luftdurchlässige Regeninfiltrationssperre (84) umfasst, die im zweiten Spalt (70) angeordnet ist.

10. Gebäudeflächenaufbau (10) mit:
einer Gebäudefläche (11); und
einer Schindelanordnung nach Anspruch 1, montiert an der Gebäudefläche (11).

11. Der Aufbau nach Anspruch 10, **dadurch gekennzeichnet, dass** der Aufbau ferner eine dritte, obere und eine vierte, untere Schindelbaugruppe umfasst, die an der Gebäudefläche (11) befestigt sind, wobei die zweiten Seitenkanten (32) der Schindelkörper (20) von dritter und vierter Schindelbaugruppe jeweils gegenüber den ersten Seitenkanten (30) der Schindelkörper (20) von erster und zweiter Schindelbaugruppe (50, 52) positioniert sind.

12. Der Aufbau nach einem der Ansprüche 10 oder 11, **dadurch gekennzeichnet, dass** die Gebäudefläche (11) eine wasserdichte Dampfsperre (12) umfasst.

13. Der Aufbau nach einem der Ansprüche 10 bis 12, ferner umfassend eine Vielzahl an Dachschindeln (16), die an der Gebäudefläche (11) befestigt sind, wobei zumindest einige der Dachschindeln (16) an die Schindelbaugruppen (50, 52) angrenzend angeordnet sind.

## Revendications

1. Système de bardeau pour montage sur une surface support (11) comprenant :
un premier ensemble bardeau supérieur et un deuxième ensemble bardeau inférieur (50, 52), chacun des premier et deuxième ensembles bardeaux (50, 52) comprenant :
une console support (34) ;
un corps de bardeau (20) comprenant une surface supérieure (22), une surface inférieure (24) et des bords supérieur et inférieur (26, 28) reliés par des premier et deuxième bords latéraux (30, 32), le corps de bardeau (20) étant fixé à la console support (34) ;
la console support (34) comprenant :
des extrémités supérieure et inférieure (36, 38) ;
l'extrémité supérieure (36) comportant une partie support supérieure (42) s'éloignant de la surface inférieure (24), la partie support supérieure (42) comportant une partie d'engagement avec la surface support supérieure (44) pouvant venir en prise avec la surface support (11) de façon que le bord supérieur (26) du corps de bardeau (20) puisse être positionné à une première distance (66) de la surface support (11) afin de créer un premier espace (68) entre elles ; et
l'extrémité inférieure (38) comportant une partie support inférieure (58) s'éloignant de la surface inférieure (24) ;
une partie du corps de bardeau (20) le long du bord inférieur (28) du premier ensemble bardeau (50) étant superposée à une partie du corps de bardeau (20) le long du bord supérieur (26) du deuxième ensemble bardeau (52) de façon que les premier et deuxième ensembles bardeaux (50, 52) se recouvrent mutuellement ;
la partie support inférieure (58) de la console support (34) du premier ensemble bardeau (50) pouvant venir en prise avec le deuxième ensemble bardeau (52) de façon à positionner le bord inférieur (28) du corps de bardeau (20) du premier ensemble bardeau (50) espacé de la surface supérieure (22) du corps de bardeau (20) du deuxième ensemble bardeau (52) afin de créer
a) un deuxième espace (70) entre la surface inférieure (24) du corps de bardeau (20) du premier ensemble bardeau (50) et la surface supérieure (22) du corps de bardeau (20) du deuxième ensemble bardeau (52), et
b) une région ouverte (72) au-dessous du premier ensemble bardeau (50) effectuant un couplage fluide des premier et deuxième espaces (68, 70) ;
**caractérisée en ce que**
une extrémité choisie parmi
c) l'extrémité inférieure (38) de la console support (34) du premier ensemble bardeau (50) et
d) l'extrémité supérieure (36) de la console support (34) du deuxième ensemble bardeau (52),
comprend une patte (62) s'étendant vers le bas en s'éloignant du corps de bardeau (20) du premier ensemble bardeau (50) jusqu'à une position située au-dessous de la surface supérieure (22) vers le corps de bardeau (20) du deuxième ensemble bardeau (52), la patte (62) comportant une ouverture (64) formée à l'intérieur;
et l'autre extrémité parmi
c) l'extrémité inférieure (38) de la console support (34) du premier ensemble bardeau (50) et
d) l'extrémité supérieure (36) de la console support (34) du deuxième ensemble bardeau (52), comprend un élément d'engagement (65) en prise à l'intérieur de ladite ouverture (64).

2. Système de bardeau selon la revendication 1, dans lequel au moins l'un des ensembles bardeaux comprend un ensemble bardeau photovoltaïque (PV) (18).

3. Système de bardeau selon la revendication 1, dans lequel la console support (34) comprend une partie médiane (40) reliant les extrémités supérieure et inférieure (36, 38).

4. Ensemble selon la revendication 1, dans lequel l'ouverture (64) dans la patte (62) se prolonge parallèlement au bord inférieur (28) du corps de bardeau (20) et l'élément d'engagement (65) se prolonge perpendiculairement au bord inférieur (28) du corps de bardeau (20).

5. Ensemble selon la revendication 1, dans lequel la partie d'engagement avec la surface support supérieure (44) du premier ensemble bardeau (50) comprend une attache d'engagement avec la surface support (46).

6. Système de bardeau selon la revendication 1, dans lequel l'extrémité inférieure (38) de la console support (34) vient en prise avec le bord inférieur (28) du corps de bardeau (20).

7. Système de bardeau selon la revendication 1, dans lequel l'extrémité inférieure (38) de la console support (34) comprend une agrafe (48) venant en prise avec le bord inférieur (28) du corps de bardeau (20).

8. Système de bardeau selon la revendication 1, dans lequel chacun des premier et deuxième ensembles bardeaux (50, 52) comprend une première et une deuxième desdites consoles support (34).

9. Système de bardeau selon la revendication 1, comprenant en outre une barrière contre l'infiltration de la pluie, perméable à l'air, (84) positionnée dans le deuxième espace (70).

10. Ensemble de surface de construction (10) comprenant :
une surface de construction (11) ; et
un système de bardeau selon la revendication 1, monté sur la surface de construction (11).

11. Ensemble selon la revendication 10, comprenant en outre un troisième ensemble bardeau supérieur et un quatrième ensemble bardeau inférieur desdits ensembles bardeaux montés sur la surface de construction (11) les deuxième bords latéraux (32) des corps de bardeau (20) des troisième et quatrième ensembles bardeaux étant respectivement positionnés à l'opposé des premiers bords latéraux (30) des corps de bardeau (20) des premier et deuxième ensembles bardeaux (50, 52).

12. Ensemble selon l'une quelconque des revendications 10 ou 11, dans lequel la surface de construction (11) comprend une barrière étanche à l'eau et au rayonnement (12).

13. Ensemble selon l'une quelconque des revendications 10 à 12, comprenant en outre une pluralité de tuiles de bardeau (16) montées sur la surface de construction (11), au moins certaines des tuiles de bardeau (16) étant adjacentes aux ensembles bardeaux (50, 52).
